(19) Europäisches Patentamt
European Patent Office
Office européen des brevets

(11) **EP 2 778 746 B1**

(12) **EUROPÄISCHE PATENTSCHRIFT**

(45) Veröffentlichungstag und Bekanntmachung des Hinweises auf die Patenterteilung:
**13.01.2016 Patentblatt 2016/02**

(51) Int Cl.:
*G02B 27/09* (2006.01)   *B23K 26/073* (2006.01)

(21) Anmeldenummer: **14158048.0**

(22) Anmeldetag: **06.03.2014**

(54) **Optische Vorrichtung zur Strahlformung**

Optical device for beam formation

Dispositif optique de formation de faisceaux

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.03.2013 DE 102013102442**

(43) Veröffentlichungstag der Anmeldung:
**17.09.2014 Patentblatt 2014/38**

(73) Patentinhaber: **Highyag Lasertechnologie GmbH 14532 Kleinmachnow (DE)**

(72) Erfinder: **Chan, Danny 14532 Kleinmachnow (DE)**

(74) Vertreter: **Tegethoff, Sebastian 24IP Law Group Sonnenberg Fortmann Patent- und Rechtsanwälte Charlottenstrasse 80 10117 Berlin (DE)**

(56) Entgegenhaltungen:
**DE-A1- 19 961 918    DE-A1-102010 027 196 US-A- 3 305 294**

• **Sanjiv K Tiwari ET AL: "Generation of a variable-diameter collimated hollow laser beam using metal axicon mirrors", Optical Engineering, 19. Januar 2011 (2011-01-19), Seite 14001, XP055124906, DOI: 10.1117/1.3530080 Gefunden im Internet: URL:http:// opticalengineering.spiedigitall ibrary.org/data/ Journals/OPTICE/23421/0140 01_1.pdf [gefunden am 2014-06-24]**

EP 2 778 746 B1

**Beschreibung**

GEBIET DER ERFINDUNG

Die Erfindung betrifft eine optische Vorrichtung und deren Verwendung zur Erzeugung einer einstellbaren Wellenfront-Deformation eines Laserstrahls. Mittels einer solchen Vorrichtung können im Fokusbereich des Laserstrahls Änderungen der Strahlfleck-Geometrie und damit auch Änderungen des Strahlparameter-Produkts des Laserstrahls erreicht werden.

HINTERGRUND DER ERFINDUNG

Bei der Anwendung von Laserstrahlung beispielsweise zur Materialbearbeitung ist es oftmals zur Optimierung der Bearbeitungsergebnisse wünschenswert eine spezielle Strahlfleck-Geometrie einstellen zu können. Für viele Anwendungen wird ein Laserstrahlfokus bzw. ein Strahlfleck mit einer ringförmigen Intensitätsverteilung benötigt.

Aus dem Stand der Technik ist dazu beispielsweise die Verwendung eines so genannten Axikons bekannt, d. h. einer Linse mit einer kegelförmigen Wirkfläche, welche in den Strahlengang einer Laserbearbeitungsoptik eingefügt wird. Vorrichtungen dieser Art sind in den Dokumenten DE 28 21 883, DE 100 44 522, DE 102 54 847 oder DE 10 2010 016 628 beschrieben.

Die dort beschriebenen Vorrichtungen dienen dazu in zumindest einer Ebene eine ringförmige Strahlverteilung zu erzielen. Eine kontinuierliche Einstellung des Strahlparameter-Produkts, beispielsweise durch Verstellung des Ringdurchmessers, ist mit den gezeigten Vorrichtungen nicht möglich. Eine Änderung des Ringdurchmessers erfordert hier den Austausch des Axikons gegen eines mit einem anderen Kegelwinkel der Kegelfläche.

Zur Erzeugung von variablen, d.h. einstellbaren Wellenfront-Deformationen ist aus dem Stand der Technik bekannt, zwei optische Elemente mit jeweils speziell geformten Flächen in den Strahlengang zu stellen, wobei die optischen Elemente quer zur Strahlrichtung gegenseitig zueinander verschiebbar angeordnet sind. Je nach Form der optischen Elemente können unterschiedliche Arten von Wellenfront-Deformationen erzeugt werden. So kann durch die seitliche Verschiebung von Elementen mit sphärischen Flächen, deren Brechkräfte sich gegenseitig kompensieren, eine ebene Wellenfront um einen einstellbaren Winkel gekippt werden, die Anordnung hat somit die Wirkung eines optischen Keils mit einstellbarem Keilwinkel. Eine solche Vorrichtung ist in der technischen Optik auch unter dem Namen "Abat'scher Keil" bekannt. Eine ähnliche Vorrichtung dieser Art, jedoch unter Verwendung von Elementen mit zylindrischen Flächen, ist aus der DE 199 61 918 bekannt.

Mit einer ähnlichen Vorrichtung, die in der US 3305294 beschrieben ist, wird eine parabolische Wellenfront-Deformation mit einstellbarer Krümmung erzeugt, was in der Wirkung einer Linse mit einstellbarer Brechkraft bzw. mit einstellbarer Brennweite einspricht. Damit diese optische Wirkung erzielt wird, müssen in diesem Fall die Elemente Oberflächenformen aufweisen, bei denen die lokale Dicke des Elements im wesentlichen durch kubische Terme, d.h. durch Potenzfunktionen dritter Ordnung, der seitlichen Ortskoordinaten x und y definiert wird. Diese Vorrichtung ist mittlerweile nach seinem Erfinder auch als "Alvarez-Linse" bekannt geworden. Diese Linse mit variabler Brechkraft ist geeignet, um beispielsweise die Fokuslage einer Optik kontinuierlich einzustellen. Die Änderung des Strahlparameter-Produkts ist damit jedoch nicht möglich.

Aus der DE 10 2010 027 196 A1 ist ein optisches System zum Erzeugen eines Linienfokus in einer Bildebene aus einem Lichtstrahl, der sich entlang einer Ausbreitungsrichtung ausbreitet, bekannt. Das optische System weist eine Strahlaufweitungsoptik, die den Lichtstrahl in einer ersten Dimension (x) senkrecht zur Ausbreitungsrichtung (z) aufweitet auf und eine Fokussieroptik, die den Lichtstrahl in einer zweiten Dimension (y) senkrecht zur Ausbreitungsrichtung (z) und senkrecht zur Ausbreiturigsrichtung (z) und senkrecht zur ersten Dimension (x) in die Bildebene fokussiert. Der Linienfokus (F) weist in der ersten Dimension (x) eine Abmessung (L) auf, die um ein Vielfaches größer ist als die Abmessung (W) des Linienfokus (L) in der zweiten Dimension (y). Das optische System weist einen Linienfokusmanipulator zum kontinuierlichen Korrigieren des Linienfokus auf, der ein erstes und zumindest ein zweites optisches Element aufweist, wobei das erste optische Element eine erste Asphäre und das zweite optische Element eine zweite optische Asphäre aufweist, wobei das erste optische Element zum kontinuierlichen Korrigieren des Verlaufs des Linienfokus relativ zueinander lagenverstellbar sind.

Mit keiner der bekannten Vorrichtungen ist es möglich, eine Wellenfront-Deformation zu erzeugen, mittels der das Strahlparameter-Produkt des Laserstrahls von seinem Ursprungswert an kontinuierlich einstellbar vergrößert werden kann.

KURZE BESCHREIBUNG DER ERFINDUNG

Der Erfindung liegt die Aufgabe zugrunde, einen Laserstrahl einstellbar so zu verändern, dass nach der Fokussierung des Strahls ein Strahlfleck erzeugt wird, dessen Form ausgehend von der ursprünglichen Fokusform kontinuierlich veränderbar ist, d.h. es soll mindestens ein Größen-Parameter der Form des Strahlflecks variabel einstellbar sein. Dabei ist es nicht das Ziel, lediglich die Fokuslage zu verändern, auch dies würde zwar den Strahldurchmesser in der ursprünglichen Fokus-Ebene verändern, jedoch bliebe dabei das Strahlparameter-Produkt unverändert. Es ist daher insbesondere Aufgabe der Erfindung, einen Größen-Parameter des Strahlflecks in der Fokus-Ebene variieren zu können, ohne dabei die Fokuslage selbst zu ändern. Auf diese Weise wird dann auch das Strahlparameter-Produkt verändert, was erwünscht ist.

Unter dem Begriff "plattenförmiges optisches Element" soll im Sinne der im folgenden beschriebenen Erfindung ein optisches Element mit Vorder- und Rückseite verstanden werden, welches eine Dicke aufweist, die um ein Vielfaches kleiner ist im Vergleich zu den seitlichen Abmessungen, und deren Vorder- und Rückseite optische Wirkflächen sind, die im allgemeinen nicht eben sind, sondern Freiformflächen mit Krümmungen oder beliebigen Strukturen sein können, so dass die Dicke des Elements lokale Änderungen aufweist und dadurch ortsabhängig ist, wobei die eine der beiden optischen Wirkflächen des plattenförmigen Elements auch eine Planfläche sein kann. Ein solches plattenförmiges optisches Element kann vereinfacht als "Platte" bezeichnet werden; insbesondere werden zwei hintereinander angeordnete plattenförmige optische Elemente im Zusammenhang mit der beschriebenen Erfindung vereinfacht als "Plattenpaar" bezeichnet.

Zur Lösung der Aufgabe wird eine Vorrichtung bestehend aus zumindest zwei plattenförmigen optischen Elementen vorgeschlagen, die eine ortsabhängige Dicke aufweisen und die in geringem Abstand hintereinander im Strahlengang eines räumlich begrenzten Strahlenbündels anzuordnen sind. Die beiden plattenförmigen Elemente sind entlang einer Achse quer zur Ausbreitungsrichtung des Strahlenbündels verschiebbar angeordnet, wobei es eine als Nullstellung bezeichnete Position der plattenförmigen Elemente zueinander gibt, bei der die Dickenprofile der beiden Elemente invers zueinander sind. Die Summe der Dickenprofile beider optischen Elemente zusammen beschreibt im Mittenschnitt entlang der Verschiebe-Achse ein Profil, welches einem gleichschenkligen Dreieck entspricht. Dabei ist die Neigung der Seiten dieses dreieckigen Profils im Mittenschnitt der Summe beider optischen Elemente einstellbar durch die Verschiebung der beiden optischen Elemente gegeneinander.

Weiterhin weisen beide plattenförmigen Elemente jeweils ein Dickenprofil auf, welches im Mittenschnitt entlang der Verschiebeachse eine konstante zweite Ortsableitung besitzt, welche in der einen Hälfte des Mittenschnitts konstant positiv ist und in der anderen Hälfte konstant negativ ist und der Betrag der zweiten Ortsableitung auf beiden Seiten gleich ist.

Es ist eine Ausführungsform der Erfindung vorgesehen, bei der die Summe der ortsabhängigen Dicken beider optischen Elemente zusammen eine Kegelfläche beschreibt, wobei der Kegelwinkel dieser Kegelfläche einstellbar ist durch die Verschiebung der beiden optischen Elemente gegeneinander. In dieser Ausführungsform ist die ortsabhängige Dicke $D_{xy}$ des einzelnen plattenförmigen Elements für beide Elemente definiert durch folgende Gleichung:

$$D_{xy} = D_0 + ( a / 2 )\{ x ( x^2 + y^2 )^{1/2} + y^2 [ \ln ( x + ( x^2 + y^2 )^{1/2} ) - \ln |y| ] \} + b\,x$$

Dabei ist x die Ortskoordinate in Richtung der Verschiebe-Achse, y die Ortskoordinate senkrecht zur Verschiebe-Achse, $D_0$ ist die Dicke des Elements auf der optischen Achse bei x = y = 0, und a und b sind zwei konstante Parameter.

Es ist weiterhin eine Ausführungsform der Vorrichtung vorgesehen, bei der die Summe der ortsabhängigen Dicken beider optischen Elemente zusammen eine Spitzdachfläche mit einem gleichschenkligen dreieckigen Querschnitt beschreibt, wobei der Neigungswinkel der Seitenflächen dieser Dachfläche einstellbar ist durch die Verschiebung der beiden optischen Elemente gegeneinander. In dieser Ausführungsform der Erfindung ist die ortsabhängige Dicke $D_{xy}$ des einzelnen plattenförmigen Elements für beide Elemente definiert durch folgende Gleichung:

$$D_{xy} = D_0 + ( a / 2 )\, x\, |x| + b\,x$$

Dabei ist x die Ortskoordinate in Richtung der Verschiebe-Achse, $D_0$ ist die Dicke des Elements auf der optischen Achse bei x = y = 0, und a und b sind zwei konstante Parameter.

Die beiden plattenförmigen Elemente können so beschaffen sein, dass das Dickenprofil der beiden plattenförmigen Elemente identisch ist, wobei das eine Element gegenüber dem anderen um 180° entlang der y-Achse gedreht angeordnet ist, wobei die y-Achse diejenige Achse ist, die sowohl senkrecht zur Verschiebe-Achse der Elemente als auch senkrecht zur optischen Achse steht.

Die beiden plattenförmigen Elemente können weiterhin so beschaffen sein, dass das Dickenprofil der beiden plattenförmigen Elemente identisch ist, wobei das eine Element gegenüber dem anderen um 180° entlang der z-Achse gedreht angeordnet ist, wobei die z-Achse gleich der optischen Achse ist.

Hinter den beiden plattenförmigen Elementen kann ein Fokussier-Objektiv angeordnet sein.

Vor den beiden plattenförmigen Elementen kann ein Kollimations-Objektiv angeordnet sein.

Es ist vorgesehen, dass die maximale Verstellung der beiden plattenförmigen Elemente gegeneinander höchstens 10% der seitlichen Abmessungen der Platten entspricht.

Es ist vorgesehen, dass die maximale Verstellung der beiden plattenförmigen Elemente gegeneinander höchstens 20% des Durchmessers des Laserstrahls entspricht.

Die Variation der Dicke der plattenförmigen Elemente kann minimal sein, indem der Parameter b des linearen Terms in den Gleichungen für das Dickenprofil der Elemente nicht Null ist sondern eine geeignete Größe aufweist.

Es ist vorgesehen, dass die plattenförmigen Elemente aus Zinksulfid hergestellt sein können.

Die Vorrichtung kann verwendet werden zur Fokussierung eines Strahlbündels, wobei durch Verschieben der beiden plattenförmigen Elemente entlang der Achse quer zur Ausbreitungsrichtung des Strahlbündels wenigstens ein Größenparameter des Strahlflecks in der Fokus-Ebene verändert wird, ohne Änderung der Fokuslage selbst.

Es ist eine Verwendung der Vorrichtung vorgesehen zur Erzeugung einer Wellenfront-Deformation, bei der das Strahlparameter-Produkt des Laserstrahls von seinem Ursprungswert an kontinuierlich einstellbar vergrößert wird.

Es ist vorgesehen, die Erfindung in einer Vorrichtung zum Fügen oder Trennen von Werkstücken zu verwenden.

KURZE BESCHREIBUNG DER FIGUREN

Die Erfindung wird anhand der folgenden Figuren näher dargestellt, ohne auf die gezeigten Ausführungsformen beschränkt zu sein. Es zeigt:

Figur 1: Schematische Darstellung einer dem Stand der Technik entsprechenden Vorrichtung zur Erzeugung eines ringförmigen Strahlflecks in der Fokus-Ebene einer Optik unter Verwendung einer Kegellinse (Axikon).

Figur 2a: Schematische Darstellung der erfindungsgemäßen Vorrichtung aus zwei plattenförmigen optischen Elementen, die gegeneinander verschiebbar angeordnet sind.

Figur 2b: Schematische Darstellung der erfindungsgemäßen Vorrichtung in einem anderen Blickwinkel, wobei die typische Oberflächenform des plattenförmigen Elements in einer möglichen Ausführungsform der Erfindung durch ein Gitternetz angedeutet ist.

Figur 3a: Darstellung einer schematischen Anordnung der erfindungsgemäßen Vorrichtung in einer Laser-Optik zur Erzeugung eines ringförmigen Strahlflecks in der Fokus-Ebene der Laser-Optik mit einem Plattenpaar in Nullstellung, so dass das Plattenpaar keine optische Wirkung hat und ein unveränderter Strahlfleck erzeugt wird.

Figur 3b: Darstellung einer schematischen Anordnung der erfindungsgemäßen Vorrichtung in einer Laser-Optik zur Erzeugung eines ringförmigen Strahlflecks in der Fokus-Ebene der Laser-Optik mit dem Plattenpaar in verschobener Stellung, so dass das Plattenpaar eine einem Axikon vergleichbare optische Wirkung hat und somit ein ringförmiger Strahlfleck erzeugt wird, wobei der Ringdurchmesser durch die Verschiebung des Plattenpaars einstellbar ist.

Figur 4a: Schematische Darstellung des Plattenpaars in einer möglichen Ausführungsform, bei der die Variation der Dicke der einzelnen Platte relativ groß ist.

Figur 4b: Schematische Darstellung des Plattenpaars in einer weiteren möglichen Ausführungsform, bei der die Freiformfläche durch geeignete Wahl eines linearen x-abhängigen Terms günstig geneigt ist und damit die Variation der Dicke der einzelnen Platte viel geringer ist.

Figur 4c: Darstellung einer Ausführungsform der Erfindung, bei der die Freiformflächen beider Elemente des Plattenpaars in derselben Richtung orientiert sind.

Figur 4d: Darstellung einer weiteren möglichen Ausführungsform der Erfindung, bei der beide Freiformflächen der Elemente des Plattenpaars nach außen gerichtet angeordnet sind, so dass sich die Planflächen der plattenförmigen Elemente gegenüberstehen.

Figur 5a-e: Schematische Darstellung des Strahlflecks in der Fokus-Ebene der Optik für eine mögliche Ausführungsform der Erfindung, bei der ein ringförmiger Strahlfleck mit einstellbarem Ringdurchmesser erzeugt wird. Zusätzlich ist das jeweils zugehörige Intensitätsprofil für verschiedene mögliche Einstellungen der Verschiebung des Plattenpaars dargestellt. In Figur 5a befindet sich das Plattenpaar in Nulllage, so dass kein Ring erzeugt wird; in den Figuren 5b bis 5e wird die Verschiebung sukzessive erhöht, so dass der Ringdurchmesser des Strahlflecks ansteigt.

Figur 6a-e: Schematische Darstellung des Strahlflecks in der Fokus-Ebene der Optik für eine weitere mögliche Ausführungsform der Erfindung, bei der ein Doppelfokus mit einstellbarem Abstand der Einzel-Foki erzeugt wird. Zusätzlich ist das jeweils zugehörige Intensitätsprofil für verschiedene mögliche Einstellungen der Verschiebung des Plattenpaars dargestellt. In Figur 6a befindet sich das Plattenpaar in Nulllage, so dass kein Doppelfokus erzeugt wird; in den Figuren 6b bis 6e wird die Verschiebung sukzessive erhöht, so dass der Abstand der Einzel-Foki ansteigt.

AUSFÜHRLICHE BESCHREIBUNG DER FIGUREN

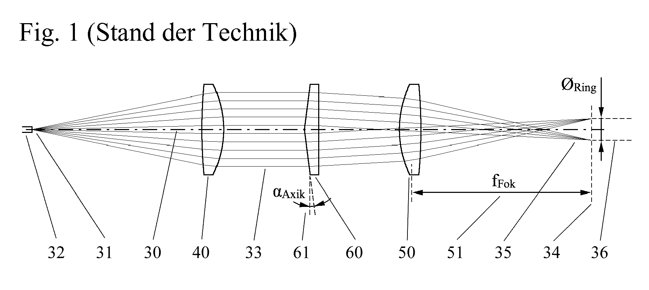

Figur 1 zeigt, wie mittels einer Kegellinse bzw. einem Axikon 60 in einer Laser-Optik ein ringförmiger Strahlfleck 35 in der Fokus-Ebene 34 der Laseroptik erzeugt wird. Die Laser-Optik besteht üblicherweise aus einem Kollimator 40 und einer Fokussierung 50, die gemeinsam auf einer optischen Achse 30 angeordnet sind. Der von einer Strahlquelle 31 emittierte Strahl wird vom Kollimator 40 kollimiert; die Strahlquelle 31 kann beispielsweise durch eine Lichtleitfaserspitze 32 gebildet sein. Die Fokussierung 50 mit der Brennweite 51 bildet den kollimierten Strahl 33 in die Fokus-Ebene 34 ab. Das Axikon 60 kann dabei zwischen Kollimator 40 und Fokussierung 50 der Laser-Optik angeordnet sein. Eine solche Vorrichtung ist aus dem Stand der Technik hinlänglich bekannt. Zur Änderung des Ringdurchmessers 36 des ringförmigen Strahlflecks 35 muss der Kegelwinkel 61 des Axikons geändert werden, was nur durch Austausch des Axikons 60 erreicht werden kann.

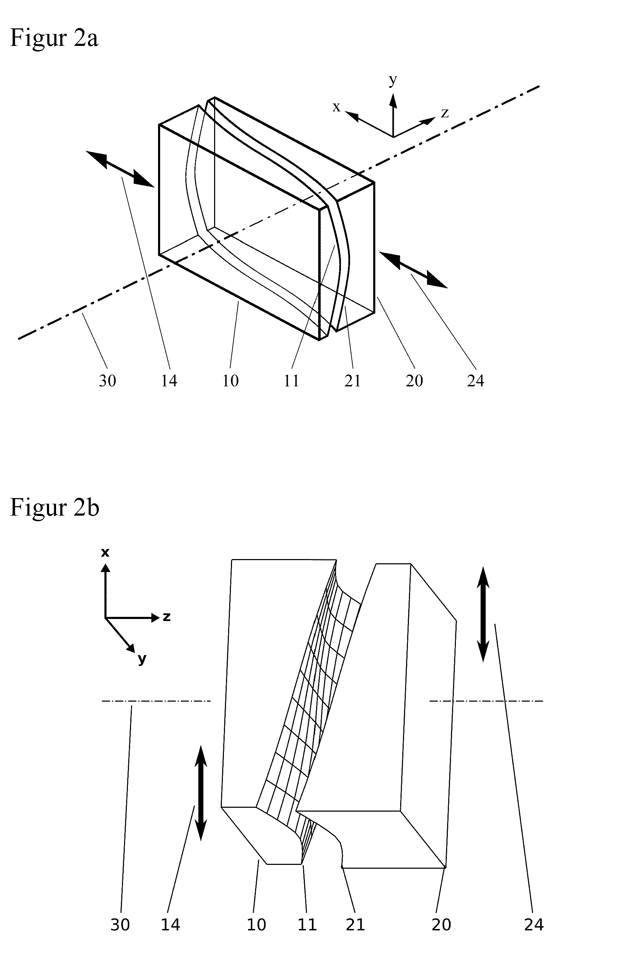

In Figur 2a ist die Erfindung schematisch dargestellt. Sie besteht aus einem ersten plattenförmigen Element 10 und einem zweiten plattenförmigen Element 20, die mit geringem Abstand zueinander auf einer optischen Achse 30 angeordnet sind und zusammen ein Plattenpaar bilden. Jedes plattenförmige Element weist mindestens eine optische Freiformfläche 11, 21 auf. Die beiden Platten sind entlang der Achsen 14 und 24 gegeneinander verschiebbar angeordnet.

Figur 2b zeigt dieselben Elemente der erfindungsgemäßen Vorrichtung wie die Figur 2a aus einem anderen Blickwinkel. Zusätzlich ist die Freiformfläche 11 des plattenförmigen Elements 10 zur Verdeutlichung der typischen Oberflächenform einer möglichen Ausführungsform der Erfindung mit einem Gitternetz dargestellt.

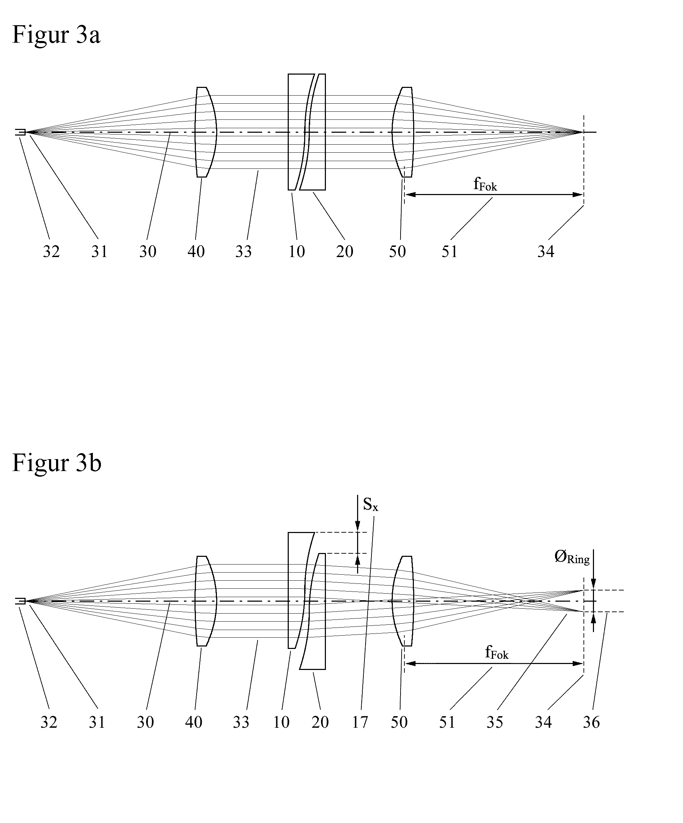

Die Figuren 3a und 3b zeigen die Verwendung der Erfindung in einer Laser-Optik. Die Laser-Optik besteht beispielsweise aus einem Kollimator 40 und einer Fokussierung 50, die gemeinsam auf einer optischen Achse 30 angeordnet sind. Der von einer Strahlquelle 31 emittierte Strahl wird vom Kollimator 40 kollimiert; die Strahlquelle 31 kann beispielsweise durch eine Lichtleitfaserspitze 32 gebildet sein. Die Fokussierung 50 mit der Brennweite 51 bildet den kollimierten Strahl 33 in die Fokus-Ebene 34 ab. Das erfindungsgemäße, von den plattenförmigen Elementen 10 und 20 gebildete Plattenpaar kann dabei zwischen Kollimator 40 und Fokussierung 50 der Laser-Optik angeordnet sein. In Figur 3a ist das Plattenpaar in Nullstellung gezeigt, d.h. die beiden plattenförmigen Elemente 10, 20 sind nicht gegeneinander verschoben, so dass sich deren optische Wirkung gegenseitig aufhebt. Der in der Fokus-Ebene 34 entstehende Strahlfleck entspricht also dem unveränderten Fokus der Laser-Optik.

Demgegenüber ist in Figur 3b das Plattenpaar in einer um den Abstand 17 (Formelzeichen $S_x$) verschobenen Stellung dargestellt. Somit kompensiert sich die Wirkung der beiden Platten 10, 20 nicht und erzeugt eine Änderung der Wellenfront des Strahls 33, so dass bei der Abbildung in die Fokus-Ebene 34 ein ringförmiger Strahlfleck 35 mit dem Ring-Durchmesser 36 (Formelzeichen $\varnothing_{Ring}$) erzeugt wird. Der Ringdurchmessers 36 des ringförmigen Strahlflecks 35 wird durch das Maß der Verschiebung 17 definiert und kann auf diese Weise eingestellt und kontinuierlich verändert werden.

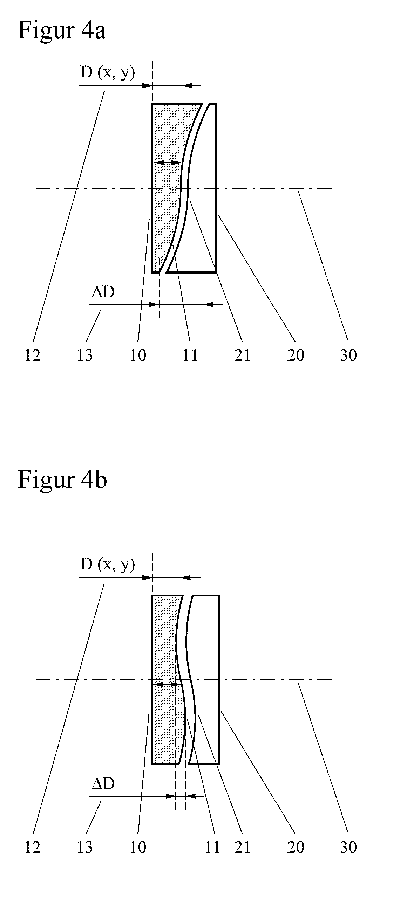

Figur 4a zeigt die Erfindung in einer möglichen Ausführungsform. Die Freiformfläche 11 des ersten plattenförmigen Elements 10 bewirkt eine variierende Dicke 12 der Platte in Abhängigkeit des Orts x, y. Die Dicken-Variation wird charakterisiert durch den Abstand 13 (Formelzeichen $\Delta D$) zwischen der minimalen und der maximalen Dicke der Platte. Diese Dicken-Variation 13 kann relativ groß sein, wenn in der mathematischen Formulierung der Freiformfläche 11 der lineare x-Term auf Null gesetzt wird. Diese Situation ist in der Abbildung 4a angedeutet, wobei die Dicken-Variation zur Verdeutlichung stark überhöht dargestellt ist.

In Figur 4b ist eine weitere Ausführungsform der Erfindung dargestellt. Um die Dicken-Variation 13 zu verringern, ist hierbei in der mathematischen Formulierung der lineare x-Term nicht auf Null gesetzt, sondern geeignet gewählt, so dass die resultierende Dicken-Variation 13 viel geringer ist. Anschaulich bewirkt der lineare x-Term eine leichte Verkippung der Freiformfläche 11. Da die Freiformfläche 21 des zweiten plattenförmigen Elements 20 in gleicher Weise gekippt ist, hat dieser lineare x-Term keine optische Wirkung und dient nur zur Minimierung der Dicken-Variation 13.

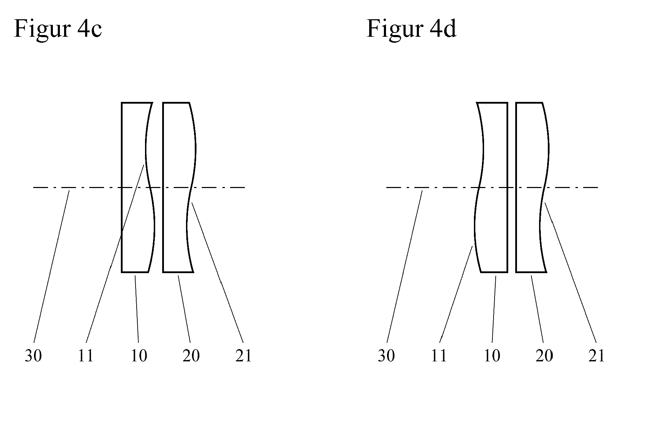

Die Figuren 4c und 4d zeigen weitere Ausführungsformen der Erfindung. Die Orientierung der plattenförmigen Elemente 10, 20 ist nicht darauf beschränkt, dass sich die Freiformflächen 11, 21 gegenüberstehen. Es ist ebenso möglich, dass beide Freiformflächen 11, 21 zur selben Seite orientiert sind, wie in der Figur 4c gezeigt, oder dass sich nicht die Freiformflächen der Elemente sondern ihre Planflächen gegenüberstehen wie in Figur 4d dargestellt.

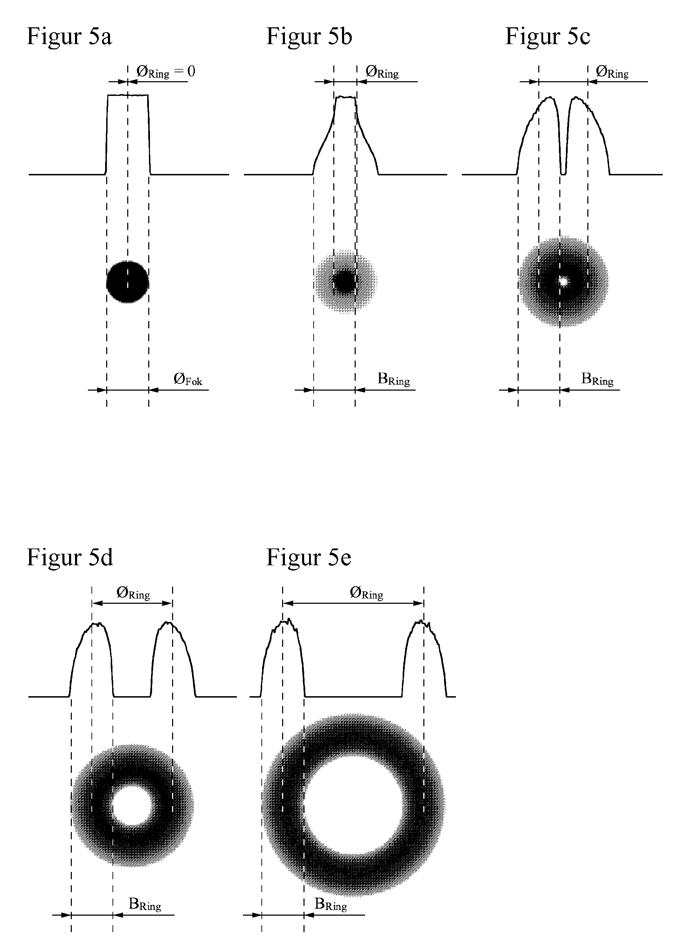

Schließlich sind in den Figuren 5a bis 5e mögliche Strahlfleck-Bilder in der Fokus-Ebene der Laser-Optik schematisch dargestellt für eine Ausführungsform der Erfindung, bei der ein ringförmiger Strahlfleck erzeugt wird. Der untere Teil der Figuren zeigt den Strahlfleck als Graustufen-Bild in Aufsicht auf die Fokus-Ebene, während darüber das jeweils zugehörige Intensitäts-Profil im Schnitt dargestellt ist. Befindet sich das Plattenpaar in Nullstellung, d.h. sind die plattenförmigen Elemente nicht gegeneinander verschoben ($S_x = 0$), dann ist der Ringdurchmesser im Strahlfleck ebenfalls Null, es gibt also keinen Ring, der Strahlfleck entspricht dem unveränderten Strahlfleck bzw. Fokus der Laser-Optik ohne Plattenpaar. Diese Situation zeigt die Abbildung 5a. Wenn hingegen die plattenförmigen Elemente gegeneinander verschoben sind, dann weist der Strahlfleck in der Fokus-Ebene eine ringförmige Gestalt auf. Mit zunehmender Verschiebung 17 steigt auch der Ringdurchmesser des ringförmigen Strahlflecks, dargestellt in den Figuren 5b bis 5e. Sobald der Ringdurchmesser so groß ist, dass in der Mitte des Strahlflecks die Intensität auf Null sinkt, ist zu erkennen, dass die Breite des Rings immer gleich dem Durchmesser des unveränderten Strahlflecks (d.h. bei Plattenpaar in Nulllage) entspricht.

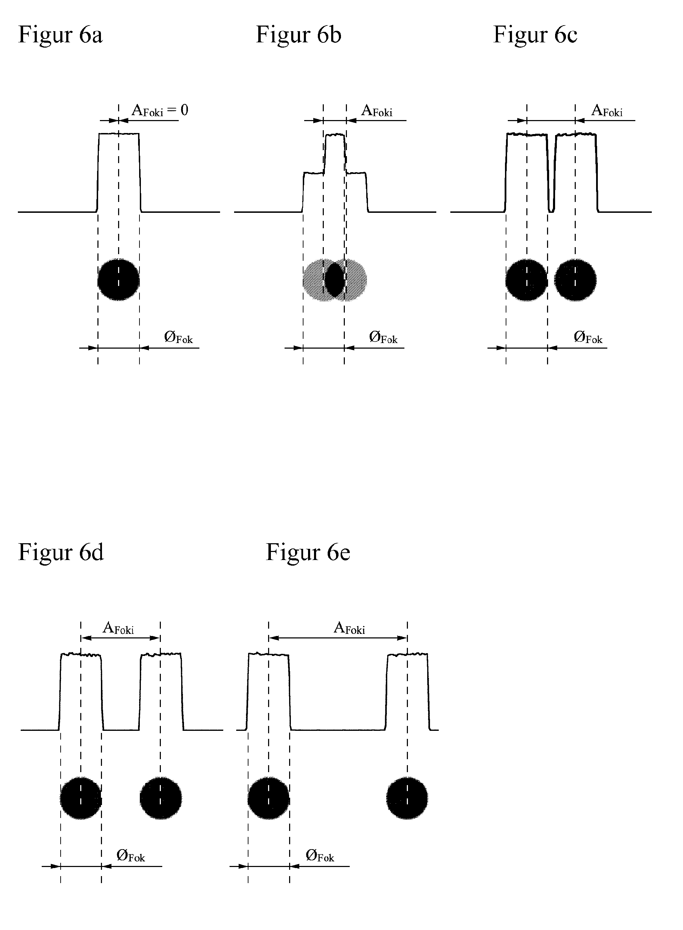

In den Figuren 6a bis 6e sind Strahlfleck-Bilder in der Fokus-Ebene der Laser-Optik für eine weitere mögliche Ausführungsform der Erfindung schematisch dargestellt, wobei ein Doppelfokus mit einstellbarem Abstand der beiden einzelnen Strahlfoki erzeugt wird. Diese Fokusform wird erzielt, wenn die Profilform der Elemente so beschaffen ist, dass jeder Schnitt in y-Richtung identisch ist mit dem Mittenschnitt bei y = 0. Wenn die beiden Elemente nicht gegeneinander verschoben sind ($S_x = 0$), dann ist der Abstand der beiden einzelnen Foki im Strahlfleck ebenfalls Null, es gibt also keinen Doppelfokus, der Strahlfleck entspricht dem unveränderten Strahlfleck der Laser-Optik ohne Plattenpaar. Diese Situation zeigt die Figur 6a. Wenn hingegen die plattenförmigen Elemente gegeneinander verschoben sind, dann weist der Strahlfleck in der Fokus-Ebene die Form eines Doppelfokus auf. Mit zunehmender Verschiebung 17 steigt auch der Abstand der einzelnen Strahlfoki, dargestellt in den Figuren 5b bis 5e. Es ist also sowohl möglich den Abstand so gering einzustellen, dass die beiden einzelnen Strahlfoki sich teilweise überlagern (Figur 6b), als auch so groß einzustellen, dass die beiden einzelnen Strahlfoki vollständig voneinander getrennt sind mit einer einstellbar großen Lücke zwischen den Strahlfoki (Figuren 6c bis 6e).

## AUSFÜHRLICHE BESCHREIBUNG DER ERFINDUNG

Es soll ein Lösung für das Problem angegeben werden, einen Laserstrahl einstellbar so zu verändern, dass nach der Fokussierung des Strahls ein Strahlfleck erzeugt wird, dessen Form ausgehend von der ursprünglichen Fokusform kontinuierlich veränderbar ist, d.h. es soll mindestens ein Größen-Parameter der Form des Strahlflecks variabel einstellbar sein, so dass damit auch das Strahlparameter-Produkt des Strahls verändert werden kann, wobei die Fokuslage selbst dabei nicht verändert werden soll.

Zur Lösung der Aufgabenstellung wird eine Vorrichtung bestehend aus zwei plattenförmigen optischen Elementen 10, 20 vorgeschlagen, die auf einer optischen Achse 30 hintereinander mit geringem Abstand zueinander angeordnet sind und quer zur optischen Achse gegeneinander verschiebbar gelagert sind (14, 24). Dabei weist jedes der beiden Elemente 10, 20 mindestens eine Freiformfläche 11, 21 auf, also eine Fläche, die nicht plan ist, nicht durch eine Sphäre beliebiger Krümmung beschreibbar ist und auch nicht rotationssymmetrisch ist, so dass die Dicke der Elemente 10, 20 ortsabhängig ist. Dabei gibt es eine als Nullstellung bezeichnete Position der plattenförmigen Elemente 10, 20 zueinander, bei der die Dickenprofile invers zueinander sind, so dass sich in dieser Position die Wirkung der beiden Platten gegenseitig aufhebt. Werden die Platten gegeneinander verschoben, dann hebt sich ihre Wirkung nicht mehr gegenseitig auf. Der Strahl 33 durchläuft beide Elemente 10, 20 nacheinander, wodurch die Wellenfront des Strahls 33 verändert wird. Die Änderung der Wellenfront entspricht dabei der Änderung der optischen Weglängen nach dem Durchlaufen der beiden Elemente 10, 20. Die Änderung der optischen Weglänge $\Delta L_{xy}$ ergibt sich aus dem folgenden Ausdruck:

$$\Delta L_{xy} = (n - 1)\,(\,D_{1xy} + D_{2xy}\,) \hspace{3cm} \text{[Formel 1]}$$

Dabei ist $D_{1xy}$ die ortsabhängige Dicke 12 des ersten optischen Elements 10 und $D_{2xy}$ ist die ortsabhängige Dicke des zweiten optischen Elements 20; n ist die Brechzahl der beiden Elemente. Die beiden Platten können um eine Strecke $S_x$ (17) in x-Richtung gegeneinander verschoben werden (14, 24), so dass die internen x-Koordinaten $x_1$, $x_2$ der beiden Platten gemäß $x_1 = x + S_x/2$ und $x_2 = x - S_x/2$ in die äußere Koordinate x überführt werden.

Dadurch dass die beiden Elemente 10, 20 in x-Richtung um die Strecke $S_x$ (17) gegeneinander verschoben werden können, variieren die Dicken $D_{1xy}$, $D_{2xy}$ der beiden Elemente an der Stelle xy, an der ein Teilstrahl des Strahlenbündels 33 die beiden Elemente durchsetzt, und somit variiert auch die optische Weglänge für diesen Teilstrahl. Auf diese Weise kann das Wellenfront-Profil des Strahlenbündels 33 kontinuierlich variiert werden, die Wellenfront-Änderung entspricht nämlich direkt dem Summen-Dickenprofil der beiden plattenförmigen Elemente 10, 20 in Abhängigkeit der Verschiebung $S_x$ (17). Nun ist eine solche Art von Vorrichtung zu Änderung des Wellenfront-Profils grundsätzlich nicht neu, wie aus dem Stand der Technik zu erkennen ist. Die Erfindung besteht insbesondere darin, das Dickenprofil der Elemente bzw. das Oberflächenprofil der Freiformflächen 11, 21 so zu bestimmen, dass die zugrundeliegende Aufgabenstellung gelöst wird.

Die Aufgabe wird dadurch gelöst, dass das Summen-Dickenprofil $\sum D_{x,0}$ des Plattenpaars, also die Summe der Dickenprofile beider optischen Elemente 10, 20 in der jeweils verschobenen Position, im Mittenschnitt entlang der Verschiebe-Achse, also in x-Richtung bei y = 0, ein Profil beschreibt, welches einem gleichschenkligen Dreieck entspricht. Dabei ist der Neigungswinkel der beiden Seiten des dreieckigen Profils einstellbar durch die Verschiebung 17 der beiden Platten 10, 20 gegeneinander. Je weiter die Platten gegeneinander verschoben werden, desto größer ist der Neigungswinkel der Seiten des dreieckigen Profils. Das Summen-Dickenprofil im Mittenschnitt des Plattenpaars ist mathematisch beschreibbar durch den folgenden Ausdruck:

$$\sum D_{x,0} = d - |x| \tan (\alpha) \qquad\qquad \text{[Formel 2]}$$

Dabei ist der Neigungswinkel $\alpha$ der Seiten des dreieckigen Profils durch die Steigung $\tan (\alpha)$ definiert. Der Neigungswinkel ist einstellbar durch die Verschiebung $S_x$ der beiden Platten gegeneinander. Der Parameter d beschreibt die Summe der Dicken beider Elemente auf der optischen Achse.

Weiterhin sollen die Dickenprofile der einzelnen Elemente 10, 20 im Mittenschnitt entlang der Verschiebe-Achse, d.h. im Schnitt entlang der x-Achse durch die optische Achse bei y = 0, eine konstante Krümmung aufweisen, welche in der einen Hälfte des Schnitts positiv ist und in der anderen Hälfte negativ; der Betrag der Krümmung ist dabei in beiden Hälften gleich. Da die Krümmung mathematisch durch die zweite Ortsableitung gegeben ist, kann diese Bedingung durch die folgenden Gleichungen beschrieben werden:

$$(\partial^2/\partial x^2)\, D_{x,0} = a \qquad \text{für } x > 0 \qquad\qquad \text{[Formel 3a]}$$

$$(\partial^2/\partial x^2)\, D_{x,0} = -a \quad \text{für } x < 0 \qquad\qquad \text{[Formel 3b]}$$

Dabei ist die Krümmung a eine Konstante, deren Größe dadurch gegeben ist, bei welcher Verschiebung $S_x$ welcher Neigungswinkel $\alpha$ erzeugt werden soll; der Zusammenhang wird durch die folgende Gleichung gegeben:

$$\tan (\alpha) = a\, S_x \qquad\qquad \text{[Formel 4]}$$

Aus Formel 4 folgt, dass eine stärkere Krümmung a gewählt werden muss, wenn man den gleichen Neigungswinkel $\alpha$ mit einer kleineren Verstellung $S_x$ erzielen möchte.

Werden die differentiellen Gleichungen in Formel 3a und 3b integriert, so erhält man als mögliche Lösung für das Dickenprofil im Mittenschnitt den folgenden Ausdruck:

$$D_{x,0} = (a / 2)\, x\, |x| \qquad\qquad \text{[Formel 5]}$$

Zu beachten ist, das der Ausdruck auf der rechten Seite von Formel 5 nicht identisch ist mit einem quadratischen Term gemäß $(a / 2)\, x^2$, da bei letzterem die konstante Krümmung nicht bei x = 0 das Vorzeichen wechselt. Der Mittenschnitt der erfindungsgemäßen optischen Elemente entspricht also einer Parabel-Funktion, bei welcher der eine Ast der Parabel an der Extremstelle im Vorzeichen gespiegelt ist. Vom qualitativen Verlauf her betrachtet hat dieses Profil eine gewisse Ähnlichkeit zu einer Funktion dritten Grades (wie z.B. $f = x^3$), welche als wesentliches Merkmal in der Vorrichtung der US 3305294 genutzt ist. Daher sehen auch die dort in den Figuren gezeigten Querschnitte der Elemente (vgl. Fig. 1, 2, 4 und 5 der US 3305294) den hier gezeigten Querschnitten (Fig. 4a bis 4d) ähnlich. Eine Funktion dritten Grades als Profilschnitt wie in der US 3305294 würde jedoch nicht die vorliegende Aufgabenstellung lösen, da dann als Resultat der Verschiebung der Elemente gegeneinander eine variable Brechkraft auftreten würde, wodurch lediglich die axiale Fokuslage verschoben würde. Dies liegt daran, dass bei einer Funktion dritten Grades die Krümmung (also die zweite Orts-Ableitung) eben nicht konstant ist, sondern linear mit dem Ort (x) ansteigt. Daher ist in der US 3305294 auch als maßgebliche Bedingung gefordert, dass die dritte Orts-Ableitung konstant ist (vgl. hierzu die Formel in Spalte 2 Zeile 64 der US 3305294), und nicht die zweite Ableitung wie in der hier vorliegenden Erfindung.

Auch aus der DE 199 61 918 ist die Lösung der Aufgabe nicht ableitbar, da zur Lösung der dort gestellten Aufgabe, nämlich die seitliche Verstellung des Fokus eines Teilstrahls, notwendigerweise Zylinderlinsen als optische Elemente eingesetzt werden müssen. Letztere besitzen zwar eine konstante Krümmung, aber ohne Vorzeichenwechsel in der einen Hälfte des Elements. Dieser Vorzeichenwechsel ist jedoch erforderlich zur Lösung der hier gestellten Aufgabe. Nur so können Teilbereiche des Strahlenbündels in verschiedene Richtungen abgelenkt werden, um so nach der Fokussierung in seitlich auseinander liegende Punkte abgebildet zu werden, wobei die Ebene der Fokus-Position entlang der optischen Achse, also in z-Richtung, erhalten bleibt. Einen Hinweis auf die Anpassung der Krümmung der optischen Elemente im Sinne der vorliegenden Erfindung enthält weder dieses Dokument, noch ein anderes Dokument aus dem Stand der Technik. Dies ergibt sich allein auch schon aus der Tatsache, dass in den letzten 14 Jahren keine Lösung gemäß der in dieser Anmeldung offenbarten Erfindung aufgezeigt wurde.

Die Beschreibung der gesamten Freiformfläche 11 oder 21 bzw. des gesamten Dickenprofils 12 über den Mittenschnitt hinaus ist abhängig von der letztendlich gewünschten Strahlform in der Fokus-Ebene 34 sowie davon, welcher Größen-Parameter durch die gegenseitige Verschiebung 17 der Elemente 10, 20 einstellbar sein soll. Um beispielsweise einen ringförmigen Strahlfleck 35 im Fokus zu erhalten, muss die Wellenfront des Strahls 33 ähnlich wie beim Durchlaufen eines Axikons geändert werden. Also muss die Summe $\sum d_{xy}$ der ortsabhängigen Dicken beider Elemente 10 und 20 zusammen dem Dickenprofil eines Axikons entsprechen, also einer Kegelfläche. In mathematischer Form lautet diese Bedingung:

$$\sum D_{xy} = d - ( x^2 + y^2 )^{1/2} \tan (\alpha) \qquad \text{[Formel 6]}$$

Für den Mittenschnitt, also für y = 0, erhält man aus Formel 6 wieder das für alle Ausführungsformen der Erfindung geforderte Mittenschnitt-Summenprofil gemäß Formel 2.

Um den ringförmigen Strahlfleck 35 in der Fokus-Ebene 34 zu erhalten, soll Formel 6 für jede Verschiebung 17 der Elemente 10, 20 zueinander gelten, und zwar derart, dass der resultierende Kegelwinkel $\alpha$ der Kegelfläche des äquivalenten Axikons, welches über die Summe des Dickenprofils der beiden Platten definiert ist, durch die Platten-Verschiebung $S_x$ (17) einstellbar ist. Um diese Forderungen zu erfüllen, müssen die einzelnen Elemente 10, 20 ein komplexes Dickenprofil aufweisen, bei dem die ortsabhängige Dicke eines Elements bestimmt ist durch den folgenden Ausdruck:

$$D_{xy} = D_0 + ( a / 2 )\{ x ( x^2 + y^2 )^{1/2} + y^2 [ \ln ( x + ( x^2 + y^2 )^{1/2} ) - \ln |y| ] \} + b x \qquad \text{[Formel 7]}$$

Dabei ist x die Ortskoordinate in Richtung der Verschiebe-Achse (14, 24), y die Ortskoordinate senkrecht zur Verschiebe-Achse, $D_0$ ist die Dicke des Elements auf der optischen Achse bei x = y = 0, und a und b sind zwei konstante Parameter. Diese Formel gibt die bestmögliche Annäherung in geschlossener mathematischer Darstellung an das ideale Dickenprofil an; andere mathematische Formulierungen oder auch numerische Darstellungen der Profilform, die sich nur in geringem Maß von der angegeben Formel unterscheiden, liegen im Bereich der Erfindung, sofern die Summe des Dickenprofils beider Elemente zusammen nur unwesentlich von dem Dickenprofil einer Kegelfläche abweicht.

Der Parameter a in Formel 7 ist gleichzeitig gemäß Formel 4 die Proportionalitätskonstante zwischen der Verstellung $S_x$ des Plattenpaars und der Neigung der Kegelfläche tan ($\alpha$).

Die mit dieser Ausführungsform der Erfindung in der Fokus-Ebene 34 eines Fokussier-Objektivs 50 erzielbaren ringförmigen Strahlflecke 35 mit einstellbarem Ringdurchmesser 36 sind schematisch in den Figuren 5a bis 5e dargestellt.

In einer weiteren Ausführungsform der Erfindung sind die Freiformflächen des Plattenpaars so gestaltet, dass die Summe der ortsabhängigen Dicken beider Elemente 10, 20 einer Spitzdach-Fläche mit einem gleichschenkligen dreieckigen Querschnitt entspricht. Das dachförmige Summen-Dickenprofil des Plattenpaars ist mathematisch beschreibbar durch den folgenden Ausdruck:

$$\sum D_{xy} = d - |x| \tan (\alpha) \qquad \text{[Formel 8]}$$

Die rechte Seite der Formel 8 ist identisch mit dem entsprechenden Ausdruck in der Formel 2 für den Mittenschnitt des Summenprofils, gilt hier aber nicht nur für den Mittenschnitt, sondern für die gesamte Fläche, also für den ganzen Wertebereich der Koordinate y.

Mit dieser Ausführungsform der Erfindung wird kein ringförmiger Strahlfleck in der Fokus-Ebene 34 erzeugt, da hier keine Rotationssymmetrie vorliegt, sondern es wird ein doppelter Strahlfleck erzeugt ähnlich einer Ablenkung des Strahls 33 durch einen Doppelkeil bzw. wie durch ein Dachkant-Prisma, wobei der Abstand der einzelnen Strahlfoki zueinander einstellbar ist durch die Verstellung $S_x$ des Plattenpaars. Die einzelnen plattenförmigen Elemente haben dabei eine ortsabhängige Dicke gemäß der folgenden Gleichung:

$$D_{xy} = (a / 2) \text{ x } |x| + b \text{ x} \qquad\qquad \text{[Formel 9]}$$

Die mit dieser Ausführungsform der Erfindung erzielbaren Strahlflecke in der Fokus-Ebene 34 eines Fokussier-Objektivs 50 sind schematisch in den Figuren 6a bis 6e dargestellt.

In den Formeln 7 und 9 für die ortsabhängige Dicke des plattenförmigen Elements ist jeweils ein additiver linearer Term (+ b x) enthalten. Die Konstante b dieses Terms ist prinzipiell frei wählbar, da dieser lineare Term das Summen-Dickenprofil nicht ändert. Diese Wahlfreiheit kann dazu genutzt werden, die Gesamt-Variation ΔD (13) der Dicke eines einzelnen Elements zu optimieren. Aus herstellungstechnischen Gründen beispielsweise kann es sinnvoll sein, die Gesamt-Variation der Dicke des einzelnen Elements gering zu halten. Dies wird erreicht durch eine geeignete Wahl der Konstanten b. Als Beispiel zeigt die Figur 4a ein Dickenprofil ohne linearen Term (d.h. b = 0), während in Figur 4b durch Wahl einer geeigneten Konstanten b die Variation der Dicke ΔD wesentlich kleiner ist.

Die Orientierung der plattenförmigen Elemente 10, 20 bezüglich Vorder- und Rückseite kann beliebig gewählt werden. Es können sich sowohl die Freiformflächen 11, 21 als auch die Planflächen gegenüberstehen; es können auch beide Freiformflächen in dieselbe Richtung zeigen. Es ist aber erforderlich, dass die Platten bezüglich der Verschiebe-Richtung, also der x-Achse, invers zueinander angeordnet sind. Verschiedene Möglichkeiten der Anordnung sind in den Figuren 4a bis 4d dargestellt.

Die beiden plattenförmigen Elemente 10, 20 des Plattenpaars können identisch aufgebaut sein, insbesondere können die Freiformflächen 11, 21 beider Platten identisch geformt sein. Die Anordnung der beiden Platten zueinander kann dann so erfolgen, dass die zweite Platte 20 gegenüber der ersten Platte 10 um 180° um die y-Achse gedreht angeordnet ist. Es ergibt sich dann eine Anordnung wie in Figur 4a, 4b oder 4d dargestellt.

Die Anordnung zweier identischer plattenförmiger Elemente kann auch so erfolgen, dass die zweite Platte 20 gegenüber der ersten Platte 10 um 180° um die z-Achse, also um die optische Achse, gedreht angeordnet ist. Eine derartige Anordnung zeigt die Figur 4c.

Bei genauer Betrachtung der durch die Vorrichtung hervorgerufenen Wellenfront-Änderung zeigt sich, dass im Zentrum des Strahls 33, also im engen paraxialen Bereich um die optische Achse 30 herum, kleine Abweichungen von der idealisiert mathematisch formulierten Wellenfront-Änderung auftreten. Die Wellenfront-Änderung ist gemäß Formel 1 proportional zum Summen-Dickenprofil der beiden Elemente 10, 20. Bei der Verschiebung 17 der Platten gegeneinander resultiert im Zentrum eine geringe Verrundung des Summen-Dickenprofils, d.h. bei ringförmiger Strahlformung ist die geforderte Kegelfläche des Summenprofils in der Mitte nicht spitz, sondern etwas abgeflacht. Da dies nur einen kleinen Teil des Strahls betrifft, ist diese Abweichung praktisch nicht von Belang, sie führt nur dazu, dass ein sehr geringer Anteil der Leistung des Strahls in den Bereich innerhalb des Rings im ringförmigen Strahlfleck verteilt wird. Dieser Effekt ist umso größer, je weiter die Platten gegeneinander verschoben werden. Um den Effekt gering zu halten, ist es daher vorteilhaft, den maximalen Verstellbereich des Plattenpaars zu begrenzen, beispielsweise auf höchstens 10% der seitlichen Abmessungen der Platten. Um dennoch den gewünschten maximalen Ringdurchmesser zu erhalten, muss dazu lediglich die Krümmung der Freiformflächen 11, 21 mittels des Parameters a ausreichend groß gewählt werden.

Um die Auswirkungen der Wellenfront-Abweichungen von der idealen Form gering zu halten, ist es auch möglich, den maximalen Verstellbereich des Plattenpaars in Abhängigkeit vom Durchmesser des aufgeweiteten Laserstrahls 33 zu begrenzen, beispielsweise auf höchstens 20% des Strahldurchmessers, den der Laserstrahl im Bereich des Plattenpaars aufweist.

Der Laserstrahl 33 mit der durch das Plattenpaar einstellbar veränderten Wellenfront kann durch ein Fokussier-Objektiv 50 abgebildet werden. Wenn der Laserstrahl 33 vor dem Plattenpaar kollimiert ist, dann wird in der Fokus-Ebene 34 des Fokussier-Objektivs 50, also etwa im Abstand der Brennweite 51 des Objektivs, ein Strahlfleck 35 erzeugt, bei dem ein Größenparameter 36 des Strahlflecks variabel eingestellt werden kann.

Bei der Ausführungsform zur Erzeugung eines ringförmigen Strahlflecks 35 ist der Durchmesser $\varnothing_{Ring}$ (36) des Rings in der Fokus-Ebene 34 des Fokussier-Objektivs 50 mit der Brennweite $f_{Fok}$ (51) durch folgende Gleichung gegeben:

$$\varnothing_{Ring} = 2\,a\,(n - 1)\,f_{Fok}\,S_x \qquad\qquad \text{[Formel 10]}$$

Dabei ist a die Krümmung der plattenförmigen Elemente im Mittenschnitt bzw. gleich dem Parameter a in Formel 7; n ist die Brechzahl der plattenförmigen Elemente 10, 20. Der Durchmesser 36 des ringförmigen Strahlflecks 35 in der Fokus-Ebene 34 ist also proportional zur Verstellung $S_x$ (17) der plattenförmigen Elemente gegeneinander. Ist die Verstellung 17 Null, dann ist auch der Ringdurchmesser 36 Null, der Strahlfleck entspricht dann dem unveränderten Fokus des Laserstrahls wie in Figur 5a dargestellt.

Bei der Ausführungsform zur Erzeugung eines Doppelfokus wird der Abstand $A_{Foki}$ der beiden einzelnen Strahlfoki in der Fokus-Ebene 34 des Fokussier-Objektivs 50 mit der Brennweite $f_{Fok}$ (51) durch den gleichen Ausdruck wie in Formel 10 beschrieben:

$$A_{Foki} = 2\,a\,(n - 1)\,f_{Fok}\,S_x \qquad\qquad [Formel\ 11]$$

Hier ist a die Krümmung der plattenförmigen Elemente im Mittenschnitt bzw. gleich dem Parameter a in Formel 9; n ist die Brechzahl der plattenförmigen Elemente. Der Abstand der einzelnen Strahlfoki in der Fokus-Ebene 34 ist somit auch proportional zur Verstellung $S_x$ (17) der plattenförmigen Elemente gegeneinander. Ist die Verstellung Null, dann ist auch der Abstand Null (siehe Figur 6a).

Um den Laserstrahl zu kollimieren, kann vor dem Plattenpaar ein Kollimations-Objektiv 40 vorgesehen sein. Dieses Kollimations-Objektiv 40 kollimiert den Strahl, d.h. es erzeugt aus einem divergenten Laserstrahl, welcher beispielsweise aus einer Lichtleitfaserspitze 32 austreten kann, ein näherungsweise paralleles Strahlenbündel 33.

Die Erfindung ist jedoch nicht beschränkt darauf, dass das Plattenpaar 10, 20 in einem kollimierten Strahl 33 angeordnet ist. Das Plattenpaar kann auch in einen divergenten oder konvergenten Bereich des Strahls angeordnet sein, der Strahl sollte lediglich so weit aufgeweitet sein, dass ein ausreichend großer Bereich des Plattenpaars vom Strahl ausgefüllt wird. Es ist daher auch möglich, das Kollimations-Objektiv 40 und das Fokussier-Objektiv 50 zu einer einzigen abbildenden Laser-Optik zusammenzufassen, wobei das Plattenpaar dann vor oder hinter der Laser-Optik angeordnet sein kann.

Das Kollimations-Objektiv 40, das Fokussier-Objektiv 50 oder die Laser-Optik kann als Objektiv mit einstellbarer Brennweite ausgeführt sein, also als Zoom-Objektiv. Auf diese Weise kann der Abbildungsmaßstab verändert werden, so dass auch eine Verstellung des Fokus-Durchmessers bzw. der Ringbreite, die ja dem Fokus-Durchmesser entspricht, unabhängig von dem Ring-Durchmesser möglich ist.

Als Material für die plattenförmigen optischen Elemente 10, 20 ist prinzipiell jedes optische Glas verwendbar.

Beim Einsatz der Vorrichtung mit Laserstrahlung hoher Leistung ist die Verwendung von optischen Gläsern und Kristallen mit besonders geringer Absorption geeignet als Material für das Plattenpaar 10, 20. Materialien mit besonders geringer Absorption sind beispielsweise Quarzglas, synthetisch hergestelltes Quarzglas, Saphir oder Zinksulfid.

Die Verwendung von Zinksulfid als Material für die plattenförmigen optischen Elemente 10, 20 ist vorteilhaft, da das Material mittels Diamant-Drehmaschinen direkt bearbeitet werden kann und dadurch komplexe Oberflächenformen leicht realisiert werden können.

Die Erfindung kann eingesetzt werden in verschiedenen Laser-Füge-Verfahren wie beispielsweise dem Trennen von Werkstücken (Schneiden, Bohren), dem Verbinden von Werkstücken (Schweißen, Löten) oder dem Auftragen von Materialien auf Werkstücke (Beschichten). In solchen Laser-Füge-Verfahren kann die Vorrichtung verwendet werden, um die Qualität des Verfahrens zu verbessern, beispielsweise um beim Schneiden glattere und gratfreie Schnittkanten zu erhalten, oder um den Anbindungs-Querschnitt beim Verschweißen zweier Werkstücke zu erhöhen, oder zur Optimierung des Energie-Einsatzes durch die Verwendung optimal angepasster Strahlformen. Dabei gestattet die Vorrichtung es einerseits, bei der Bearbeitung verschiedener Werkstücke jeweils optimale Strahlformen einstellen zu können, ohne die Vorrichtung umzubauen oder auszutauschen, und andererseits ist auch die Anpassung der Strahlform während der Bearbeitung möglich, beispielsweise wenn sich innerhalb einer Füge-Geometrie die Materialstärken der Werkstücke ändern. Es ist weiterhin möglich, die Strahlform als Stellgröße in einem Regelkreis eines Laser-Füge-Prozesses zu verwenden, um in Echtzeit auf Veränderungen der Füge-Qualität zu reagieren.

**Bezugszeichenliste**

| 10 | Erstes plattenförmiges Element |
| 11 | Freiformfläche des ersten Elements |
| 12 | Dicke des plattenförmigen Elements |
| 13 | Variation der Dicke des plattenförmigen Elements |
| 14 | Verstell-Richtung des ersten Elements |
| 17 | Verschiebung zwischen erstem und zweitem Element |
| 20 | Zweites plattenförmiges Element |
| 21 | Freiformfläche des zweiten Elements |
| 24 | Verstell-Richtung des zweiten Elements |

30    Optische Achse
31    Strahlquelle, Strahlaustrittspunkt oder Strahltaille
32    Lichtleitfaserspitze
33    Kollimierter Strahl
34    Fokus-Ebene des Strahls
35    Ringförmiger Strahlfokus
36    Ring-Durchmesser des ringförmigen Strahlfokus
37    Ring-Breite des ringförmigen Strahlfokus
40    Kollimations-Objektiv
50    Fokussier-Objektiv
51    Brennweite des Fokussier-Objektivs
60    Axikon (Kegellinse)
61    Winkel der Kegelfläche des Axikons

**Patentansprüche**

1.   Optische Vorrichtung, umfassend zumindest zwei plattenförmige optische Elemente (10, 20), die eine ortsabhängige Dicke aufweisen und die in geringem Abstand hintereinander im Strahlengang eines räumlich begrenzten Strahlenbündels (33) anzuordnen sind, wobei die beiden plattenförmigen Elemente (10, 20) entlang einer Achse (14, 24) quer zur Ausbreitungsrichtung des Strahlenbündels verschiebbar angeordnet sind und wobei es eine als Nullstellung bezeichnete Position der plattenförmigen Elemente (10, 20) zueinander gibt, bei der die Dickenprofile invers zueinander sind, **dadurch gekennzeichnet**,

     a. dass die Summe der Dickenprofile beider optischen Elemente (10, 20) zusammen im Mittenschnitt entlang der Verschiebe-Achse ein Profil beschreibt, welches einem gleichschenkligen Dreieck entspricht, und wobei die Neigung der Seiten dieses dreieckigen Profils im Mittenschnitt der Summe beider optischen Elemente einstellbar ist durch die Verschiebung (17) der beiden optischen Elemente (10, 20) gegeneinander, und
     c. dass beide plattenförmigen Elemente (10, 20) ein Dickenprofil aufweisen, welches im Mittenschnitt entlang der Verschiebe-Achse (14, 24) eine konstante zweite Ortsableitung besitzt, welche in der einen Hälfte des Mittenschnitts konstant positiv ist und in der anderen Hälfte konstant negativ ist und der Betrag der zweiten Ortsableitung auf beiden Seiten gleich ist.

2.   Vorrichtung nach Anspruch 1, **dadurch gekennzeichnet, dass** die Summe der ortsabhängigen Dicken beider optischen Elemente (10, 20) zusammen eine Kegelfläche beschreibt.

3.   Vorrichtung nach Anspruch 2, wobei der Kegelwinkel der Kegelfläche einstellbar ist durch die Verschiebung (17) der beiden optischen Elemente gegeneinander.

4.   Vorrichtung nach Anspruch 1 bis 3, **dadurch gekennzeichnet, dass** die ortsabhängige Dicke $D_{xy}$ eines einzelnen plattenförmigen Elements für beide Elemente (10, 20) definiert ist durch die folgende Gleichung:

$$D_{xy} = D_0 + ( a / 2 )\{ x ( x^2 + y^2 )^{1/2} + y^2 [ \ln ( x + ( x^2 + y^2 )^{1/2} ) - \ln |y| ] \} + b x$$

wobei x die Ortskoordinate in Richtung der Verschiebe-Achse ist, y die Ortskoordinate senkrecht zur Verschiebe-Achse, $D_0$ die Dicke des Elements auf der optischen Achse bei x = y = 0 ist, und a und b zwei konstante Parameter sind.

5.   Vorrichtung nach Anspruch 1, **dadurch gekennzeichnet, dass** die Summe der ortsabhängigen Dicken beider optischen Elemente (10, 20) zusammen eine Spitzdachfläche mit einem gleichschenkligen dreieckigen Querschnitt beschreibt.

6.   Vorrichtung nach Anspruch 5, wobei der Neigungswinkel der Seitenflächen der Spitzdachfläche einstellbar ist durch die Verschiebung (17) der beiden optischen Elemente gegeneinander.

7.   Vorrichtung nach Anspruch 1, 5 oder 6, **dadurch gekennzeichnet, dass** die ortsabhängige Dicke $D_{xy}$ eines einzelnen plattenförmigen Elements für beide Elemente (10, 20) definiert ist durch die folgende Gleichung:

$$D_{xy} = D_0 + (a/2) \times |x| + b \times$$

wobei x die Ortskoordinate in Richtung der Verschiebe-Achse ist, $D_0$ die Dicke des Elements auf der optischen Achse bei x = y = 0 ist, und a und b zwei konstante Parameter sind.

8. Vorrichtung nach wenigstens einem der vorhergehenden Ansprüche, **dadurch gekennzeichnet, dass** das Dickenprofil der beiden plattenförmigen Elemente (10, 20) identisch ist und das eine Element gegenüber dem anderen um 180° entlang der y-Achse gedreht angeordnet ist, wobei die y-Achse diejenige Achse ist, die sowohl senkrecht zur Verschiebe-Achse (14, 24) der Elemente als auch senkrecht zur optischen Achse (30) steht.

9. Vorrichtung nach wenigstens einem der Ansprüche 1 bis 7, **dadurch gekennzeichnet, dass** das Dickenprofil der beiden plattenförmigen Elemente (10, 20) identisch ist und wobei das eine Element gegenüber dem anderen um 180° entlang der z-Achse gedreht angeordnet ist, wobei die z-Achse gleich der optischen Achse (30) ist.

10. Vorrichtung nach wenigstens einem der vorhergehenden Ansprüche, **dadurch gekennzeichnet, dass** in Strahlrichtung hinter den beiden plattenförmigen Elementen (10, 20) ein Fokussier-Objektiv (50) angeordnet ist.

11. Vorrichtung nach wenigstens einem der vorhergehenden Ansprüche, **dadurch gekennzeichnet, dass** in Strahlrichtung vor den beiden plattenförmigen Elementen (10, 20) ein Kollimations-Objektiv (40) angeordnet ist.

12. Vorrichtung nach wenigstens einem der vorhergehenden Ansprüche, **dadurch gekennzeichnet, dass** die maximale Verstellung der beiden plattenförmigen Elemente (10, 20) gegeneinander höchstens 10% der seitlichen Abmessungen der Platten entspricht.

13. Vorrichtung nach wenigstens einem der vorhergehenden Ansprüche, **dadurch gekennzeichnet, dass** die maximale Verstellung der beiden plattenförmigen Elemente (10, 20) gegeneinander höchstens 20% des Durchmessers des Laserstrahls entspricht.

14. Vorrichtung nach wenigstens einem der vorhergehenden Ansprüche, **dadurch gekennzeichnet, dass** die plattenförmigen Elemente (10, 20) aus Zinksulfid hergestellt sind.

15. Verwendung einer Vorrichtung nach Anspruch 10 zur Fokussierung eines Strahlbündels, wobei durch Verschieben der beiden plattenförmigen Elemente entlang einer Achse quer zur Ausbreitungsrichtung des Strahlbündels wenigstens ein Größenparameter des Strahlflecks in der Fokus-Ebene verändert wird, ohne Änderung der Fokuslage selbst.

16. Verwendung einer Vorrichtung nach einem der Ansprüche 1 bis 14 zur Erzeugung einer Wellenfront-Deformation, bei der das Strahlparameter-Produkt des Laserstrahls von seinem Ursprungswert an kontinuierlich einstellbar vergrößert wird.

17. Verwendung einer Vorrichtung nach einem der Ansprüche 1 bis 14 in einer Vorrichtung zum Fügen oder Trennen von Werkstücken sowie dem Auftrag von Materialien auf Werkstücke.

**Claims**

1. Optical device comprising at least two plate-like optical elements (10, 20), which have a position dependent thickness and which are positioned in a row at short distance in the optical path of a position limited ray beam (33), wherein both plate-like elements (10, 20) are arranged displaceable along an axis (14, 24) transversal to the propagation direction of the ray beam, and wherein a position of the plate-like elements (10, 20) called zero position is defined at which the thickness profiles are inverse to each other, **characterized in that**:

   a. the total sum of the thickness profiles of both optical elements (10, 20) together describes in a centre cross section along the displacement axis a profile, which corresponds to an isosceles triangle, and wherein the inclination of the laterals of the said isosceles triangle triangular profile in a centre cross section is adjustable by displacement (17) of both optical elements (10, 20) against each other, and

b. both plate-like elements (10, 20) provide a thickness profile that shows a constant second derivative in a centre cross section along the displacement axis (14, 24), which is constantly positive in one half of the centre cross section and constantly negative in the other half and the value of the second derivative is the same on both sides.

2. Device according to claim 1, **characterized in that** the sum of the position dependent thicknesses of both optical elements (10, 20) describes a cone surface.

3. Device according to claim 2, wherein the cone angle of the cone surface can be adjusted by displacement (17) of both optical elements against each other.

4. Device according to one of claims 1 to 3, **characterized in that** the position dependent thickness $D_{xy}$ of a single plate-like element is defined for both elements (10, 20) by the following equation:

$$D_{xy} = D_0 + ( a / 2 )\{ x ( x^2 + y^2 )^{1/2} + y^2 [ \ln ( x + ( x^2 + y^2 )^{1/2} ) - \ln |y| ] \} + b x$$

wherein x is the coordinate in the direction of the displacement axis, y is the coordinate vertically to the displacement axis, $D_0$ is the thickness of the element on the optical axis with x = y = 0, and a and b are two constant parameters.

5. Device according to claim 1, **characterized in that** the sum of the position dependent thicknesses of both optical elements (10, 20) together describes a pitched roof surface with an isosceles triangular cross section.

6. Device according to claim 5, wherein the inclination angle of the lateral surfaces of the pitched roof surface is adjustable by displacement (17) of both optical elements against each other.

7. Device according to one of claims 1, 5 or 6, **characterized in that** position dependent thickness $D_{xy}$ of a single plate-like element is defined for both elements (10, 20) by the following equation:

$$D_{xy} = D_0 + ( a / 2 ) x |x| + b x$$

wherein x is the coordinate in the direction of the displacement axis, $D_0$ is the thickness of the element on the optical axis with x = y = 0, and a and b are two constant parameters.

8. Device according to at least one of the preceding claims, **characterized in that** the thickness profile of both plate-like elements (10, 20) is identical and that one element is arranged rotated by 180° along the y-axis with respect to the other element, and the y-axis is the axis which is positioned both vertically to the displacement axis (14, 24) of the elements and vertically to the optical axis (30).

9. Device according to at least one of claims 1 to 7, **characterized in that** the thickness profile of both plate-like elements (10, 20) is identical and one element is rotated by 180° along the z-axis with respect to the other element, and the z-axis corresponds to the optical axis (30).

10. (Original) The device according to at least one of the preceding claims, **characterized in that** a focusing lens (50) is arranged behind both plate-like elements (10, 20) in the beam direction.

11. Device according to at least one of the preceding claims, **characterized in that** a collimation lens (40) is arranged in front of both plate-like elements (10, 20) in the beam direction.

12. Device according to at least one of the preceding claims, **characterized in that** the maximum displacement of both plate-like elements (10, 20) against each other corresponds to maximal 10% of the lateral dimensions of the plates.

**13.** Device according to at least one of the preceding claims, **characterized in that** the maximum displacement of both plate-like elements (10, 20) against each other corresponds to maximal 20% of the diameter of the laser-beam.

**14.** Device according to at least one of the preceding claims, **characterized in that** the plate-like elements (10, 20) are made of zinc sulphide.

**15.** Use of a device according to claim 10, for focusing a beam, wherein by displacement of both plate-like elements along an axis transversal to the propagation direction at least one size parameter of the of the beam spot in the focal plane is modified without modifying the focal position itself.

**16.** Use of a device according to one of claims 1 to 14, for generating a wave front deformation with the beam parameter product of the laser-beam being continuously adjustable and magnifiable beginning with its original value.

**17.** Use of a device according to one of claims 1 to 14, in an assembly for joining or cutting components as well as to fill up materials on workpieces.

**Revendications**

**1.** Dispositif optique, comprenant au moins deux éléments optiques en forme de plaque (10, 20), qui comprennent une épaisseur variable localement et qui sont placés l'un derrière l'autre avec un faible espacement dans le chemin optique d'un faisceau lumineux (33) confiné dans un espace limité, dans lequel les deux éléments en forme de plaque (10, 20) sont agencés coulissants le long d'un axe (14, 24) transverse à la direction de propagation du faisceau lumineux, et dans lequel il existe une position des éléments en forme de plaque (10, 20) l'un par rapport à l'autre, appelée position nulle, dans laquelle les profils d'épaisseur sont inversés l'un par rapport à l'autre, **caractérisé en ce que**

a. la somme totale des profils d'épaisseur des deux éléments optiques (10, 20) ensembles en coupe médiane le long de l'axe de coulissement présente un profil qui correspond à un triangle isocèle, et dans lequel l'inclinaison des côtés de ce profil triangulaire en coupe centrale de la somme de deux éléments optiques est ajustable par le coulissement (17) des deux éléments optiques (10, 20) l'un par rapport à l'autre, et
c. les deux éléments en forme de plaque (10, 20) comprennent un profil d'épaisseur qui, en coupe centrale le long de l'axe de coulissement (14, 24), comprend une dérivée seconde constante, qui dans une moitié de la coupe centrale est constante positive et dans l'autre moitié constante négative, et la valeur de la dérivée seconde est la même des deux côtés.

**2.** Dispositif selon la revendication 1, **caractérisé en ce que** la somme des épaisseurs variables localement des deux éléments optiques (10, 20) forme une surface conique.

**3.** Dispositif selon la revendication 2, dans lequel l'angle de cône de la surface conique est réglable par le coulissement (17) des deux éléments optiques l'un par rapport à l'autre.

**4.** Dispositif selon la revendication 1 à 3, **caractérisé en ce que** l'épaisseur variable localement $D_{xy}$ d'un élément en forme de plaque unique est défini pour les deux éléments (10, 20) par l'équation suivante :

$$D_{xy} = D_0 + ( a / 2 )\{ \ x \ ( \ x^2 + y^2 \ )^{1/2} + y^2 \ [ \ \ln \ ( \ x + ( \ x^2 + y^2 \ )^{1/2} \ ) - \ln |y| \ ] \ \} + b \ x$$

dans lequel x est la coordonnée de position en direction de l'axe de coulissement, y est la coordonnée de position perpendiculaire à l'axe de coulissement, $D_0$ est l'épaisseur de l'élément sur l'axe optique lorsque x = y = 0, et a et b sont deux paramètres constants.

**5.** Dispositif selon la revendication 1, **caractérisé en ce que** la somme des épaisseurs variables localement des deux éléments optiques (10, 20) décrit une surface pyramidale avec une section transverse triangulaire isocèle.

**6.** Dispositif selon la revendication 5, dans lequel l'angle d'inclinaison des deux surfaces latérales de la surface pyramidale est réglable par le coulissement (17) des deux éléments optiques l'un par rapport à l'autre.

**7.** Dispositif selon la revendication 1, 5 ou 6, **caractérisé en ce que** les épaisseurs variables localement $D_{xy}$ d'un élément en forme de plaque unique est défini pour les deux éléments (10, 20) par l'équation suivante :

$$D_{xy} = D_0 + ( a / 2 ) \; x \; |x| + b \; x$$

dans lequel x est la coordonnée de position en direction de l'axe de coulissement, $D_0$ est l'épaisseur de l'élément sur l'axe optique pour laquelle x = y = 0, et a et b sont deux paramètres constants.

**8.** Dispositif selon au moins l'une quelconque des revendications précédentes, **caractérisé en ce que** le profil d'épaisseur des deux éléments en forme de plaque (10, 20) est identique et **en ce qu'**un élément est agencé par rapport à l'autre en étant tourné de 180 degrés le long de l'axe y, dans lequel l'axe y est l'axe qui est à la fois perpendiculaire à l'axe de coulissement (14, 24) des éléments et perpendiculaire à l'axe optique (30).

**9.** Dispositif selon au moins l'une quelconque des revendications 1 à 7, **caractérisé en ce que** le profil d'épaisseur des deux éléments en forme de plaque (10, 20) est identique, et dans lequel un élément est agencé en étant retourné par rapport à l'autre de 180 degrés le long de l'axe z, dans lequel l'axe z est l'axe optique (30).

**10.** Dispositif selon au moins l'une quelconque des revendications précédentes, **caractérisé en ce qu'**une lentille de focalisation (50) est agencé derrière les deux éléments en forme de plaque (10, 20) dans la direction de faisceau.

**11.** Dispositif selon au moins l'une quelconque des revendications précédentes, **caractérisé en ce qu'**une lentille de collimation (40) est agencée devant les deux éléments en forme de plaque (10, 20) dans la direction de faisceau.

**12.** Dispositif selon au moins l'une quelconque des revendications précédentes, **caractérisé en ce que** le réglage maximal des deux éléments en forme de plaque (10, 20) l'un par rapport à l'autre correspond au maximum à 10% des dimensions latérales des plaques.

**13.** Dispositif selon au moins l'une quelconque des revendications précédentes, **caractérisé en ce que** le réglage maximal des deux éléments en forme de plaque (10, 20) l'un par rapport à l'autre correspond au maximum à 20% du diamètre du rayon laser.

**14.** Dispositif selon l'une quelconque des revendications précédentes, **caractérisé en ce que** les éléments en forme de plaque (10, 20) sont faits de sulfure de zinc.

**15.** Utilisation d'un dispositif selon la revendication 10 pour focaliser un faisceau lumineux, dans lequel au moins un paramètre de grandeur d'un spot de faisceau dans le plan focal peut être modifié par le coulissement de deux éléments en forme de plaque le long d'un axe transverse à la direction de propagation du faisceau lumineux, sans modification de la position focale elle-même.

**16.** Utilisation d'un dispositif selon l'une quelconque des revendications 1 à 14 pour engendrer une déformation de front d'onde, le produit de paramètres de faisceau du faisceau laser étant augmenté depuis sa valeur d'origine par ajustement continu.

**17.** Utilisation d'un dispositif selon l'une quelconque des revendications 1 à 14 dans un dispositif adapté pour ajouter ou séparer des pièces ainsi que pour l'ajout de matériau sur des pièces.

Fig. 1 (Stand der Technik)

Figur 2a

30  14  10  11  21  20  24

Figur 2b

30  14  10  11  21  20  24

## Figur 3a

32    31    30    40    33    10    20    50    51    34

## Figur 3b

32    31    30    40    33    10    20    17    50    51    35    34    36

Figur 4a

D (x, y)

ΔD

12    13    10    11    21    20    30

Figur 4b

D (x, y)

ΔD

12    13    10    11  21    20    30

Figur 4c

Figur 4d

30    11    10    20    21          30    11    10    20    21

## Figur 5a

$\emptyset_{Ring} = 0$

$\emptyset_{Fok}$

## Figur 5b

$\emptyset_{Ring}$

$B_{Ring}$

## Figur 5c

$\emptyset_{Ring}$

$B_{Ring}$

## Figur 5d

$\emptyset_{Ring}$

$B_{Ring}$

## Figur 5e

$\emptyset_{Ring}$

$B_{Ring}$

# Figur 6a

# Figur 6b

# Figur 6c

# Figur 6d

# Figur 6e

**IN DER BESCHREIBUNG AUFGEFÜHRTE DOKUMENTE**

**In der Beschreibung aufgeführte Patentdokumente**

- DE 2821883
- DE 10044522
- DE 10254847
- DE 102010016628
- DE 19961918
- US 3305294 A
- DE 102010027196 A1